# FASCICULE DE BREVET EUROPEEN

(11) **EP 0 845 755 B1**
(45) Date de publication et mention de la délivrance du brevet: **10.03.2004**
(21) Numéro de dépôt: 96810838.1
(22) Date de dépôt: 02.12.1996
(51) Int. Cl.: G06K 19/077, G06K 19/073

(54) **Carte à puce et programme pour cartes à puces**
IC-Karte und Program für IC-Karten
IC-card and program for IC-cards

(43) Date de publication de la demande: 03.06.1998
(73) Titulaire: Swisscom Mobile AG, 3050 Bern (CH)
(72) Inventeur: Jeger, Peter, 1787 Môtier (CH)
(74) Mandataire: BOVARD AG - Patentanwälte

(56) Documents cités:
- EP-A- 0 172 108
- US-A- 5 049 728

## Description

La présente invention concerne le domaine des cartes à puces.

Par carte à puce, on entend dans la suite de la description et des revendications une carte intégrant au moins un circuit électronique, par exemple un microprocesseur et/ou des éléments de mémoire, et des moyens d'interface permettant à la carte de communiquer avec un dispositif de lecture et/ou d'écriture de carte à puce. Les moyens d'interface peuvent comporter par exemple une zone de contacts électriques sur une des faces de la carte à puce ou une bobine dans la carte, permettant une lecture ou une modification de la carte par liaison magnétique sans contacts. La plupart des cartes à puces courantes ont des dimensions standardisées valant 53,98 x 85,60 x 0,76 mm. Les cartes à puces sont généralement fabriquées par laminage de plusieurs couches synthétiques, le circuit électronique étant logé dans ou sur une des couches internes du laminage. Par microprocesseur, on entend n'importe quelle machine séquentielle apte à exécuter un programme ou un microprogramme enregistré dans une mémoire interne ou externe au microprocesseur. Par élément de mémoire électronique, on entend n'importe quel type de mémoire vive ou morte. Par programme, on entend n'importe quelle suite d'instructions destinée à être exécutée séquentiellement par un microprocesseur ou une machine séquentielle. Par déroulement d'un programme, on entend la succession d'instructions et de valeurs prises par les variables au cours d'une exécution particulière du programme.

Les cartes à puces trouvent un champ d'applications toujours plus étendu. Comme exemple, mentionnons l'identification de personnes, par exemple comme carte d'accès pour des espaces réservés, les cartes bancaires, les cartes de payement, le stockage de données confidentielles, l'utilisation d'automates, en particulier de cabines téléphoniques, la téléphonie mobile (cartes SIM - Subscriber Identification Module - en technologie GSM), les abonnements, la télévision à péage, etc..

Les cartes à puces conventionnelles nécessitent un dispositif de lecture-écriture approprié pour lire ou modifier leur contenu. Un tel dispositif est relativement coûteux et encombrant et ne peut donc pas être utilisé partout, ce qui limite les applications possibles des cartes à puces.

Dans le document EP 172 108 est décrite une carte à puce à circuit intégré qui contient un fusible par l'application d'une tension, le fusible fond, ce qui permet de neutraliser l'accès à un domaine mémorisé sur la carte à puce.

Dans le document US 5,049,728 est décrite une carte à puce muni d'un microprocesseur, cette carte est mise hors circuit afin que des parties interchangeables puissent y être installées ou en être retirées, afin que le déroulement de programmes soit modifié sur ladite carte à puce.

Un but de la présente invention est de proposer une carte à puce améliorée.

Selon l'invention, ce but est atteint grâce à une carte à puce comportant les éléments de la revendication 1.

Dans une variante, ce but est atteint grâce à une carte à puce comportant les éléments de la revendication 9.

L'invention sera mieux comprise à l'aide de la description donnée à titre d'exemple et illustrée par les figures qui montrent :
La figure 1 une première variante de carte à puce selon l'invention comprenant trois portions amovibles avec un élément résistif dans chaque portion amovible.
La figure 2 une deuxième variante.de carte à puce selon l'invention comprenant trois portions amovibles avec un élément inductif dans chaque portion amovible.
La figure 3 une troisième variante de carte à puce selon l'invention comprenant trois portions amovibles avec un élément capacitif dans chaque portion amovible.
La figure 4 une quatrième variante de carte à puce selon l'invention comprenant une seule portion amovible.
La figure 5 illustre une deuxième possibilité de connecter électriquement les portions amovibles de la carte à puce au microprocesseur.
La figure 6 illustre une troisième possibilité de connecter électriquement les portions amovibles de la carte à puce au microprocesseur.
La figure 7 illustre une variante de la carte à puce dans laquelle chaque portion amovible de la carte à puce comporte un élément de mémoire électronique.
La figure 8 illustre une variante de la carte à puce comportant uniquement un élément de mémoire, mais pas de microprocesseur.

Les figures sont schématiques. Il n'est donc généralement pas possible d'en déduire des dimensions.

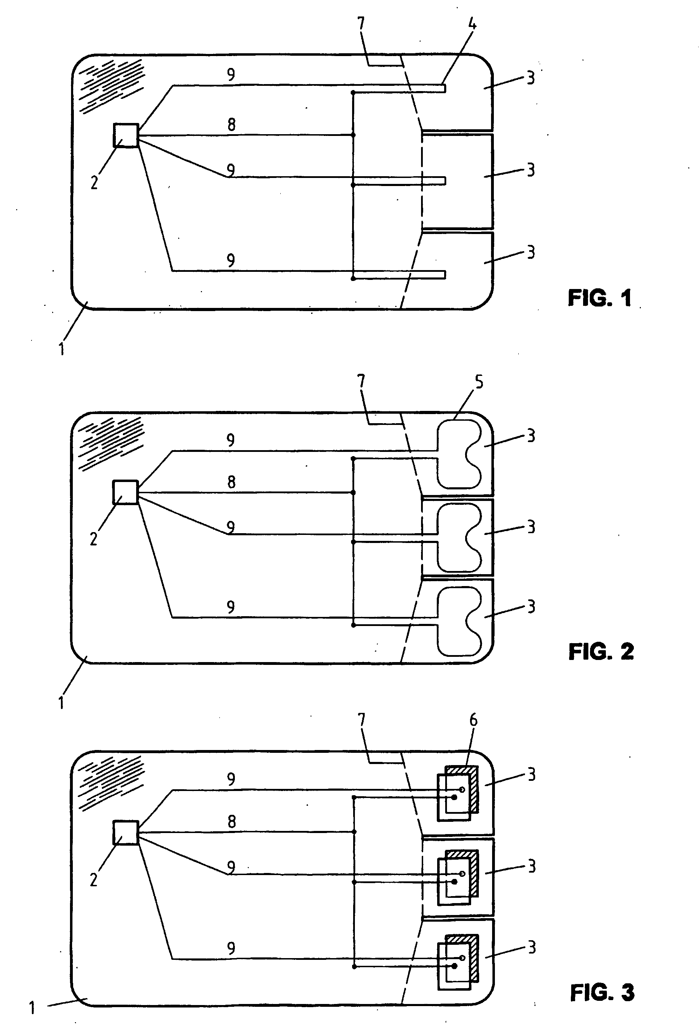

La figure 1 illustre schématiquement une première variante de carte à puce 1 selon l'invention. La carte comporte un microprocesseur 2 apte à exécuter un programme enregistré par exemple dans une mémoire morte intégrée au microprocesseur. Le microprocesseur est de préférence monté sur une carte de circuit imprimé très fine assemblée entre deux couches synthétiques. Le microprocesseur 2 peut aussi être noyé dans une couche de liant ou de résine entre les deux couches externes de la carte. La carte à puce comporte de préférence des moyens d'interface non représentés permettant au microprocesseur de communiquer avec un dispositif à l'extérieur de la carte. Les moyens d'interface peuvent par exemple être constitués par une zone de contacts métallisés à fleur d'une des faces externes de la carte. Les moyens d'interface peuvent cependant également être constitués par une bobine dans la carte apte à communiquer avec une autre bobine dans un dispositif de lecture /écriture externe à la carte. D'autres composants électroniques peuvent si nécessaire être logés dans la carte, par exemple d'autres microprocesseurs, des éléments de mémoires, des composants électroniques discrets, une batterie, etc... En outre, la carte 1 peut de manière bien connue intégrer d'autres éléments de sécurité, par exemple un hologramme, une photo ou une empreinte digitale.

La carte à puce 1 comporte dans cet exemple trois portions amovibles 3 prévues pour pouvoir être déchirées ou enlevées. Dans cet exemple de réalisation, les portions amovibles 3 sont séparées du reste de la carte par une ligne prédécoupée 7, permettant à l'utilisateur d'arracher facilement et indépendamment chacune des portions 3. D'autres moyens peuvent être prévus pour permettre l'enlèvement d'une quelconque des portions 3. Par exemple, la carte peut simplement être munie sur une de ses faces d'une impression le long de la ligne 7 suggérant de découper la carte à cet endroit. Dans une variante, une des couches du laminage constituant la carte est affaiblie le long de la ligne 7 de manière à ce que la carte se brise à cet endroit lorsqu'une des portions amovibles 3 est pliée. Dans une autre variante, un fil peut être intégré dans la structure de la carte le long de la ligne 7. En le tirant, on peut arracher la portion amovible 3 correspondante. D'autres moyens d'enlèvement par découpe, arrachage, poinçonnage, etc.. peuvent facilement être imaginés par l'homme du métier.

La carte à puce 1 intègre un circuit électrique formé de plusieurs branches reliant le microprocesseur à chacune des portions amovibles 3. Nous reviendrons plus loin sur différentes configurations possibles du circuit. Les branches du circuit peuvent être constituées par exemple par des fils électriques noyés dans la structure de la carte, ou par des pistes d'un circuit imprimé constituant une des couches de la carte par exemple. Une branche au moins du circuit traverse chaque portion amovible 3. Cette branche est coupée lorsque la portion amovible est retirée.

Dans la figure 1, les branches 4 traversant chaque portion amovible 3 sont constituées uniquement par un fil électrique. En arrachant ou découpant une des portions 3, on coupe la branche 4 correspondante dont la résistance passe de celle d'un court-circuit (quelques ohms) à celle d'un circuit ouvert. Ce changement de résistance est détecté par le microprocesseur 2. Le programme exécuté par le microprocesseur 2 comporte au moins une instruction dont le résultat dépend de cette résistance. Le déroulement du programme exécuté sera donc différent en fonction de la présence ou de l'absence de chaque portion amovible 3. Nous verrons plus loin un exemple d'applications de cartes à puces pouvant tirer parti de cette caractéristique.

Avec la configuration de circuit adoptée sur les figures 1 à 3, la présence ou l'absence de chaque portion amovible 3 peut être aisément détectée par le microprocesseur 2 en écrivant sur la ligne d'émission 8 un signal, par exemple un signal à +5V, et en lisant sur chaque ligne de réception 9 correspondant à chaque portion amovible la valeur du signal reçu en retour.

La figure 2 illustre une variante de l'invention dans laquelle les branches traversant chaque portion amovible intègrent un élément inductif 5. L'élément inductif peut être constitué par un élément de bobine discret soudé au fils 8, 9, ou, si les fils sont constitués par les pistes d'un circuit imprimé, plus simplement par une disposition en spirale des pistes conductrices du circuit imprimé. L'arrachement d'une des portions amovibles 3 provoque une brusque variation de l'inductance de l'élément inductif correspondant, variation qui peut être aisément détectée par le microprocesseur 2.

La figure 3 illustre une variante de l'invention dans laquelle les branches traversant chaque portion amovible intègrent un élément capacitif 6. L'élément capacitif 6 est de préférence constitué par deux plaques de condensateur logées dans des couches distinctes de l'empilement de couches laminées constituant la carte 1. L'enlèvement d'une des portions amovibles 3 provoque une variation importante de la capacité associée, variation qui peut facilement être détectée par le microprocesseur 2 par exemple en envoyant un signal alternatif sur la ligne d'émission 8 et en analysant le signal reçu sur chaque ligne de lecture 9.

La variante de la figure 1 est simple et économique à réaliser. En revanche, elle n'offre pas une sécurité optimale, puisqu'un faussaire pourrait sans difficultés excessives provoquer un court-circuit entre le fil 8 et un des fils 9 d'une portion arrachée 3. Par exemple, un court-circuit entre les brins 8 et 9 peut être simulé en déposant une métallisation le long de la ligne 7 de découpe d'une portion amovible arrachée. Cette variante ne s'applique donc qu'à des utilisations pour lesquelles le besoin en sécurité n'est pas trop critique. A cet égard, les variantes plus onéreuses des figures 2 et 3 sont beaucoup plus sûres, puisqu'elles ne pourraient être contrefaites qu'en soudant un élément inductif, respectivement capacitif, sur les brins coupés d'une portion arrachée.

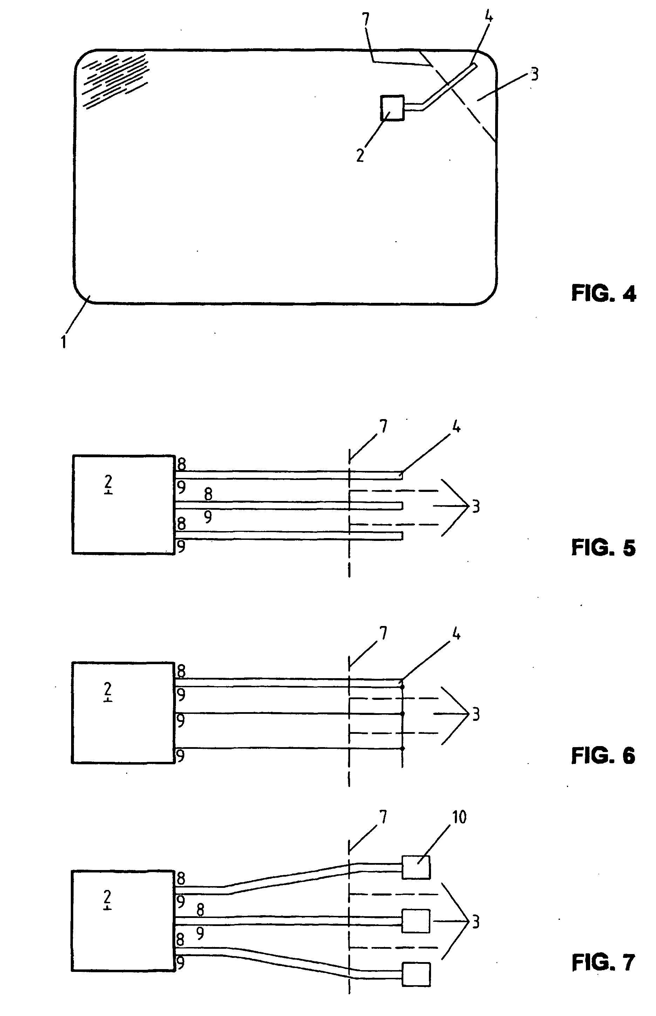

L'invention ne se limite évidement pas au cas particulier de trois portions amovibles comme illustré sur les figures 1 à 3. Le nombre de portions amovibles peut être quelconque selon l'application et n'est limité que par la difficulté qu'il y aurait à arracher des portions trop petites. De même, la disposition des portions amovibles sur un côté de la carte n'est donnée qu'à titre d'exemple particulièrement pratique. La figure 4 illustre une autre variante dans laquelle seul un coin 3 de la carte 1 peut être déchiré. Le microprocesseur 2 est de préférence placé près de ce coin. Plusieurs coins prédécoupés peuvent naturellement aussi être prévus.

Les dimensions de la carte à puce intacte sont de préférence au format standardisé ISO indiqué ci-dessus, et inférieures à ce standard lorsqu'une ou plusieurs portions amovibles 3 ont été prédécoupées. Dans une variante, les dimensions de la carte entière sont supérieures au format ISO, et égales à ce format lorsque toutes les portions amovibles 3 ont été arrachées.

Les portions amovibles 3 peuvent également être prévues contre le milieu de la carte plutôt que sur un de ses bords. Dans ce cas, elles pourront par exemple être retirées en enfonçant ou poinçonnant des portions prévues à cet effet avec un doigt ou avec un instrument adapté. Par prévu à cet effet, on entend ici par exemple une portion prédécoupée, une portion faite d'un matériau moins résistant, ou simplement une zone spécialement marquée à cet effet sur une des faces externes de la carte à puce 1.

La figure 5 illustre schématiquement une autre configuration possible du circuit entre le microprocesseur 2 et les portions amovibles 3. Dans cette variante, chaque portion 3 est reliée au microprocesseur par une boucle indépendante, c'est-à-dire que le microprocesseur possède une sortie 8 et une entrée 9 distinctes pour chaque portion amovible. Par rapport aux variantes précédentes, cette configuration nécessite davantage de sorties sur le microprocesseur 2.

La figure 6 illustre schématiquement une troisième configuration possible du circuit entre le microprocesseur 2 et les portions amovibles 3. Dans cette variante, les portions amovibles 3 sont traversées en série par la ligne d'écriture 8. Cette solution nécessite le même nombre de lignes que les variantes illustrées en relation avec les figures 1 à 3; toutefois, toutes les configurations d'arrachage de portions ne peuvent pas être distinguées. Par exemple, le microprocesseur ne peut pas distinguer si toutes les portions 3 ont été arrachées ou seulement la portion amovible en haut sur cette figure. Cette solution convient par exemple à des applications de la carte à puce pour lesquelles les portions amovibles 3 doivent être arrachées dans un ordre prédéfini.

La figure 7 illustre une autre variante de l'invention dans laquelle chaque portion amovible 3 intègre un élément actif, dans cet exemple un élément de mémoire 10. L'élément de mémoire 10 peut être constitué par une mémoire vive ou de préférence morte, stockant au moins un bit ou beaucoup plus. Selon le type de mémoire 10, un nombre de lignes supérieur à deux sera probablement nécessaire entre le microprocesseur 2 et les portions amovibles 3. Cette variante offre une sécurité optimale, puisque les informations enregistrées dans les éléments de mémoire 10 sont physiquement rendues inaccessibles par l'arrachage des portions amovibles 3 correspondantes.

L'homme du métier comprendra que l'invention ne se limite pas aux exemples décrits de zones amovibles contenant une résistance, un élément inductif, un élément capacitif ou un élément de mémoire, mais que n'importe quelle combinaison d'un ou plusieurs éléments passifs ou actifs dans chaque zone amovible peut être utilisée. En outre, différentes zones amovibles sur une même carte peuvent éventuellement comporter des éléments passifs ou actifs de type ou de valeur différente. Dans ce cas, d'autres configurations possibles de circuit entre le microprocesseur et les portions amovibles peuvent être facilement imaginées. Par exemple, si chaque zone amovible contient une résistance de valeur différente, il est possible de les mettre toutes en parallèle avec des moyens de mesure de résistance intégrés dans le microprocesseur.

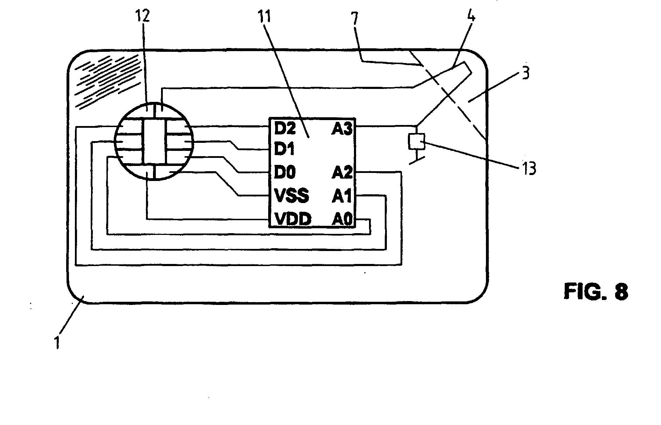

La figure 8 illustre une variante de l'invention appliquée à des cartes sans microprocesseurs, notamment à des cartes contenant uniquement un ou des éléments de mémoire 11 destinés à être lus par un dispositif externe. La mémoire 11 communique avec l'extérieur de la carte 1 par l'intermédiaire d'une interface représentée symboliquement ici sous la forme d'une zone de contacts électriques 12. En pratique, la mémoire 11 sera de préférence située directement sous la zone de contact 12. L'accès à certaines portions de la mémoire dépend de la présence ou de l'absence des portions amovibles 3. La mémoire 11 comprend dans cet exemple 4 lignes d'adresse numérotées de A0 à A3 et trois lignes de données D0 à D2, ainsi que deux lignes d'alimentation Vss et Vdd. La mémoire pourrait aussi comprendre d'autres lignes, notamment des lignes de lecture/écriture, selon le type de mémoire (ex: EPROM ou EEPROM).

Toutes les entrées-sorties de la mémoire 11 sont directement reliées à des portions différentes de la zone de contact 12, permettant ainsi à un dispositif externe de lire ou de modifier directement la mémoire. Seule la ligne d'adresse de poids fort A3 traverse la portion amovible 3 entre le microprocesseur et la zone de contact. Une résistance "pull-down" 13 est branchée entre l'entrée A3 de la mémoire et la masse. En arrachant la portion amovible 3, on force l'entrée A3 à rester à zéro: l'accès à la moitié supérieure de la mémoire est ainsi bloqué.

Cette variante peut naturellement s'appliquer sans difficultés à des cartes comprenant plusieurs portions amovibles permettant chacune de bloquer l'accès à une portion spécifique de la mémoire. Si d'autres lignes d'adresse que la ligne de poids fort A3 traversent des portions amovibles 3, il est possible de bloquer l'accès à des portions de mémoire de taille variable. En adaptant très légèrement le circuit, il est aussi possible de fabriquer des cartes dans lesquelles certaines portions de la mémoire ne sont accessibles que lorsque certaines portions ont été préalablement arrachées.

Nous allons maintenant passer en revue un certain nombre d'applications pour les différentes variantes de carte à puce selon l'invention, en particulier les variantes discutées ci-dessus. Ces applications sont données uniquement à titre d'exemples non limitatifs, étant entendu que d'autres applications peuvent être imaginées.

Les applications de l'invention peuvent être réparties en trois groupes. Dans un premier groupe d'applications, l'enlèvement des portions amovibles 3 permet de bloquer un service ou une fonctionnalité de la carte accessible seulement lorsque la carte est intacte. Dans un deuxième groupe d'applications, l'enlèvement des portions amovibles 3 permet au contraire de libérer un service ou une fonctionnalité de la carte bloqué lorsque la carte est intacte. Enfin, dans un troisième groupe d'applications, l'enlèvement des portions amovibles 3 provoque une modification quelconque du déroulement du programme exécuté par le microprocesseur de la carte ou du système de lecture-écriture de la carte.

Un exemple de la première série d'application concerne par exemple une carte de visite électronique. Les cartes de visite conventionnelles présentent l'inconvénient d'être chères à imprimer, car faites en petites séries. Chaque modification des coordonnées de la personne nécessite l'impression d'une nouvelle série de cartes. En outre, le volume d'informations que l'on peut faire figurer sur une carte de visite ordinaire est limité par la surface de la carte. Il n'est pas possible d'adapter l'éventail d'informations sur la carte à la personne à qui on la donne. Enfin, la personne qui reçoit la carte désire souvent introduire les données qui y figurent dans une base de donnée ou un agenda électronique, ce qui nécessite un temps assez important. Pour pallier à certains de ces inconvénients, on a suggéré par exemple dans GB2270875 de munir la carte de visite d'une mémoire électronique dans laquelle sont stockées un certain nombre d'informations qui peuvent ensuite être relues par un dispositif approprié. Il n'est cependant pas possible de stocker des informations confidentielles dans la mémoire électronique de la carte, car il est impossible d'en restreindre la lecture par le destinataire.

Une première proposition d'application de la carte concerne donc une carte de visite électronique permettant de choisir l'éventail d'informations que l'on donne à celui qui reçoit la carte. Dans un exemple, la carte de visite contient plusieurs types d'informations:
1) Les informations figurant habituellement sur une carte de visite conventionnelle: nom, prénom, adresse, société, fonction, téléphone, fax, e-mail, etc.. Ces informations restent toujours accessibles.
2) D'autres informations non confidentielles, telles que produits, adresses et personnes de contact de la société. Selon la capacité de la mémoire, des graphiques ou des images peuvent aussi être mémorisés. Ces informations restent également toujours accessibles.
3) Des données sensibles ou confidentielles sur le propriétaire, tel que prédispositions médicales, allergies, personne à appeler en cas d'urgence, etc. Ces données ne doivent pas être communiquées à tout un chacun, mais seulement par exemple à son médecin, etc.. Leur accès peut être bloqué en déchirant une portion 3 de la carte prévue à cet effet.
4) D'autres données confidentielles qui ne doivent pas quitter le cercle de l'entreprise ou de quelques fournisseurs ou clients de confiance. Ces données peuvent également être rendues inaccessibles en déchirant une autre portion amovible 3 de la carte.

Une autre application concerne les cartes d'accès pour des espaces réservés, par exemple dans des usines ou sur des domaines skiables. On connaît déjà des cartes à puces conventionnelles utilisées comme clé programmable. Dans l'art antérieur, un dispositif de lecture-écriture spécial est utilisé pour programmer la carte et définir quelles sont les zones et les portes auxquelles la carte donne accès. Ces dispositifs sont coûteux et difficiles à programmer. Une deuxième application de l'invention concerne donc des cartes d'accès pour des zones réservées, par exemple dans une usine ou un domaine skiable, dans lesquelles l'accès à certaines zones peut être circonscrit par arrachage d'une portion de la carte, donc sans appareil et sans programmation. Un avantage est qu'il est facile de vérifier visuellement et sans appareil à quelles zones donne droit la carte. Une telle carte peut donc être utilisée favorablement dans un environnement mixte comportant à la fois des zones fermées par des portails ouverts en introduisant une carte à puce dans un lecteur de carte et d'autres zones surveillées par un portier vérifiant visuellement les cartes d'accès.

Une application similaire concerne les cartes à puces utilisées pour la télévision à péage. On connaît déjà des chaînes de télévision à péage qui ne peuvent être regardées que par des utilisateurs munis d'un décodeur. L'utilisation du décodeur nécessite l'introduction d'une carte à puce donnant par exemple droit à un certain nombre d'heures de visionnement. Une carte à puce à portions amovibles selon l'invention peut être utilisée pour restreindre l'accès aux programmes offerts. Dans ce cas, la carte à puce comporte une ou plusieurs portions amovibles correspondant à un ou plusieurs types de programmes. Le décodeur est programmé pour décoder un certain type de programme seulement si une carte comportant la portion correspondante est insérée dans le lecteur de cartes du décodeur. Il est ainsi très facile pour des parents de bloquer à leurs enfants l'accès à certains types de programmes.

Une autre application similaire concerne la monnaie électronique, ou e-cash. Des cartes de monnaie électronique sont vendues dans un kiosque: la valeur de la carte peut être modifiée par le vendeur en arrachant des portions amovibles de la carte. Il n'est ainsi pas nécessaire que le vendeur possède en stock un choix de cartes de monnaie électronique de différentes valeurs.

Une autre application concerne les cartes SIM (Subscriber Identification Module) utilisées notamment dans les appareils de téléphone mobile au standard GSM. Ces cartes contiennent une série de données concernant l'utilisateur et peuvent être programmées pour donner à son propriétaire accès à des services téléphoniques supplémentaires. L'utilisateur qui prête son appareil peut souhaiter restreindre l'accès à certains services: en arrachant certaines portions amovibles d'une carte à puce selon l'invention, il est possible de bloquer l'accès à certains services ou à certains numéros de téléphone.

Comme indiqué, le deuxième groupe d'applications concerne des cartes dans lesquelles l'enlèvement d'une portion amovible permet de libérer un service ou une fonctionnalité de la carte inaccessible lorsque la carte est intacte. Cette série concerne surtout des applications pour lesquelles il est important de pouvoir vérifier visuellement comment et combien de fois la carte a été utilisée. Elle concerne par exemple des abonnements pour une série de prestations. Par exemple, une carte de métro pour 10 courses selon l'invention . comporte 10 portions amovibles. Le portail à l'entrée du métro est programmé pour ne s'ouvrir que si l'utilisateur a à chaque fois arraché une portion amovible 3 supplémentaire de sa carte. L'utilisateur peut ainsi aisément vérifier combien de courses il lui reste sur son abonnement.

Lorsque la carte contient des données confidentielles, par exemple des données personnelles ou un mot de passe secret, l'acquéreur désire s'assurer que la carte n'a pas été lue par un intermédiaire entre le producteur de la carte et lui-même. De même, pour les cartes destinées à des automates ou donnant droit à des prestations rémunérées par l'achat de la carte, l'acquéreur désire s'assurer que la carte qu'il achète n'a pas été utilisée par un intermédiaire. Selon l'invention, il est aisé de munir la carte d'une contrepartie amovible, en sorte que la carte est utilisable seulement lorsque la contrepartie a été enlevée. De cette manière, il est facile pour l'utilisateur de vérifier si sa carte est vierge ou si elle a déjà été utilisée.

Une application typique de ce type concerne des cartes de crédit contenant des données personnelles et/ou confidentielles qui ne sont lisibles que si au moins une portion amovible 3 a été déchirée préalablement.

Les cartes de monnaie électronique (e-cash) peuvent aussi tirer parti de ce deuxième groupe d'applications. Dans ce cas, la carte e-cash est chargée avec un montant prédeterminé qui ne peut être libéré, en une ou plusieurs fois, qu'en déchirant une ou plusieurs zones amovibles. De cette manière, l'acquéreur peut être certain que la carte achetée contient encore le montant entier avec lequel elle a été chargée. La zone amovible 3 joue dans ce cas le rôle d'un sceau de verrouillage permettant de vérifier visuellement la virginité de la carte. Plusieurs zones amovibles 3 peuvent être prévues sur la carte, l'arrachage de chaque zone libérant un sous-montant du montant total chargé sur la carte. De préférence toutefois, la carte contient pour cette application une seule zone amovible 3 permettant de libérer la totalité du montant chargé.

Le troisième groupe d'applications est plus général et inclut en fait également les applications du premier et du deuxième groupe. Il concerne des applications basées sur un programme comprenant au moins une instruction dont le résultat dépend de la présence ou de l'absence d'une portion amovible 3. L'enlèvement d'une portion amovible de la carte provoque la modification d'un registre de n bits (n>=1) dans le microprocesseur 2. Le microprocesseur comporte au moins une instruction de test ou de lecture de ce registre, en sorte que l'enlèvement d'une portion 3 provoque une modification du déroulement du programme exécuté par le microprocesseur. Le registre modifiable peut aussi être utilisé comme variable dans n'importe quelle opération logique ou arithmétique exécutée par le microprocesseur et conduire de cette manière à une modification du déroulement du programme, la même séquence d'instruction étant dans ce cas exécutée quelle que soit la valeur du registre modifié, mais avec un autre ensemble de variables.

Si la carte comporte un microprocesseur 2, l'arrachement d'une portion amovible 3 provoque une modification du programme exécuté par le microprocesseur 2. Si la carte ne comporte pas de microprocesseur, l'enlèvement d'une portion amovible 3 peut être détectée par un dispositif de lecture-écriture externe comportant un microprocesseur exécutant un programme comportant au moins une étape de lecture d'informations sur la carte à puce.

## Revendications

1. Carte à puce (1) comportant un microprocesseur (2) apte à exécuter un programme enregistré dans une mémoire, **caractérisée en ce que** le déroulement dudit programme peut être modifié en enlevant irrévocablement une ou plusieurs portions (3) de la carte à puce prévues à cet effet.

2. Carte à puce selon la revendication précédente, **caractérisée en ce que** ledit microprocesseur (2) fait partie d'un circuit électrique comprenant plusieurs branches (8, 9), une branche au moins passant par chacune desdites portions (3) de la carte prévues pour être enlevées, l'enlèvement de chacune desdites portions provoquant la rupture de la branche associée du circuit, le microprocesseur (2) étant relié audit circuit de manière à pouvoir détecter cette rupture.

3. Carte à puce (2) selon la revendication précédente, **caractérisée en ce que** lesdites branches (8, 9) passant par lesdites portions (3) de la carte comportent au moins un élément résistif (4).

4. Carte à puce selon la revendication 2, **caractérisée en ce que** lesdites branches (8, 9) passant par lesdites portions (3) de la carte comportent au moins un élément inductif (5).

5. Carte à puce selon la revendication 2, **caractérisée en ce que** lesdites branches (8, 9) passant par lesdites portions (3) de la carte comportent au moins un élément capacitif (6).

6. Carte à puce selon la revendication précédente, **caractérisée en ce que** lesdits éléments capacitifs (6) comportent deux électrodes de condensateur logées dans deux couches différentes de la carte à puce laminée.

7. Carte à puce selon la revendication 2, **caractérisée en ce que** lesdites branches (8, 9) passant par lesdites portions de la carte comportent au moins un élément de mémoire (10).

8. Carte à puce selon l'une des revendications précédentes, **caractérisée en ce qu'**elle comporte au moins un registre dont le contenu dépend de la présence ou de l'absence d'une des portions (3) de la carte à puce prévues pour pouvoir être enlevées, et **en ce que** le programme enregistré dans ladite mémoire comprend au moins une instruction de test ou de lecture dudit registre.

9. Carte à puce (1) comportant au moins un élément de mémoire électronique (11) et des moyens d'interface (12) permettant à la carte de communiquer avec un dispositif externe, **caractérisée en ce que** l'accès à certaines portions dudit élément de mémoire peut être bloqué ou libéré en enlevant irrévocablement une ou plusieurs portions (3) de la carte à puce prévues à cet effet.

## Patentansprüche

1. IC-Karte (1) mit einem Mikroprozessor (2), der für die Ausführung eines in einem Speicher gespeicherten Programms geeignet ist, **dadurch gekennzeichnet, dass** der Ablauf des genannten Programms durch unwiderrufliche Entfernung eines oder mehrerer dafür vorgesehenen IC-Kartenteile (3) geändert werden kann.

2. IC-Karte nach dem vorgehenden Anspruch, **dadurch gekennzeichnet, dass** der Mikroprozessor (2) zu einem elektrischen Stromkreis gehört, der mehrere Schenkel (8, 9) umfasst, wobei mindestens ein Schenkel jeden zu entfernenden Kartenteil (3) durchläuft, wobei die Entfernung der einzelnen Teile zum Abbruch des jeweiligen Stromkreisschenkels führt, wobei der Mikroprozessor (2) derart mit dem genannten Stromkreis verbunden ist, dass er diesen Abbruch detektieren kann.

3. IC-Karte (2) nach dem vorgehenden Anspruch, **dadurch gekennzeichnet, dass** die die genannten Kartenteile (3) durchlaufenden genannten Schenkel (8, 9) mindestens ein resistives Element (4) umfassen.

4. IC-Karte nach Anspruch 2, **dadurch gekennzeichnet, dass** die die genannten Kartenteile (3) durchlaufenden genannten Schenkel (8, 9) mindestens ein induktives Element (5) umfassen.

5. IC-Karte nach Anspruch 2, **dadurch gekennzeichnet, dass** die die genannten Kartenteile (3) durchlaufenden genannten Schenkel (8, 9) mindestens ein kapazitives Element (6) umfassen.

6. IC-Karte nach dem vorgehenden Anspruch, **dadurch gekennzeichnet, dass** die genannten kapazitiven Elemente (6) zwei Kondensatorelektroden beinhalten, die in zwei unterschiedlichen Schichten der laminierten IC-Karte eingebettet sind.

7. IC-Karte nach Anspruch 2, **dadurch gekennzeichnet, dass** die die genannten Kartenteile durchlaufenden genannten Schenkel (8, 9) mindestens ein Speicherelement (10) umfassen.

8. IC-Karte nach einem der vorgehenden Ansprüche, **dadurch gekennzeichnet, dass** sie mindestens ein Verzeichnis umfasst, dessen Inhalt von der An- bzw. Abwesenheit eines der zu entfernenden IC-Kartenteile (3) abhängt, und dass das im genannten Speicher gespeicherte Programm mindestens einen Befehl zum Prüfen oder Lesen des genannten Verzeichnisses umfasst.

9. IC-Karte (1), mit mindestens einem elektronischen Speicherelement (11) und Schnittstellenmitteln (12) zur Kommunikation der Karte mit einer externen Vorrichtung, **dadurch gekennzeichnet, dass** der Zugang zu bestimmten Teilen des genannten Speicherelementes durch Entfernung eines oder mehrerer dafür vorgesehenen IC-Kartenteile (3) gesperrt oder freigegeben werden kann

## Claims

1. Chipcard (1) comprising a microprocessor (2) able to execute a program recorded in a memory, **characterised in that** the execution of said program is able to be modified by irrevocably removing one or more chipcard portions (3) provided for that purpose.

2. Chipcard according to the preceding claim, **characterised in that** said microprocessor (2) forms part of an electric circuit having a plurality of branches (8, 9), at least one branch passing through each of said card portions (3) designed to be removed, the removal of each of said portions causing the break of the associated circuit branch, the microprocessor (2) being connected to said circuit in such a way as to be able to detect this break.

3. Chipcard (2) according to the preceding claim, **characterised in that** said branches (8, 9) passing through said card portions (3) include at least one resistive element (4).

4. Chipcard according to claim 2, **characterised in that** said branches (8, 9) passing through said card portions (3) include at least one inductive element (5).

5. Chipcard according to claim 2, **characterised in that** said branches (8, 9) passing through said card portions (3) include at least one capacitive element (6).

6. Chipcard according to the preceding claim, **characterised in that** said capacitive elements (6) have two capacitor electrodes accommodated in two different layers of the laminated chipcard.

7. Chipcard according to claim 2, **characterised in that** said branches (8, 9) passing through said card portions include at least one memory element (10).

8. Chipcard according to one of the preceding claims, **characterised in that** it includes at least one register whose content depends on the presence or absence of one of the chipcard portions (3) designed to be able to be removed, and the recorded program in said memory includes at least one instruction to test or to read said register.

9. A chipcard (1) comprising at least one electronic memory element (11) and interface means (12) allowing the card to communicate with an external device, **characterised in that** the access to certain portions of said memory element can be blocked or released by removing irrevocably one or more chipcard portions (3) provided for that purpose.
